Europäisches Patentamt

(19) European Patent Office

Office européen des brevets

(11) Veröffentlichungsnummer: **0 018 313**
**A1**

(12) # EUROPÄISCHE PATENTANMELDUNG

(21) Anmeldenummer: 80730030.6

(22) Anmeldetag: 01.04.80

(51) Int. Cl.³: **H 02 G 3/16,** H 02 G 3/14,
H 01 H 50/02

(30) Priorität: 18.04.79 DE 2916045

(43) Veröffentlichungstag der Anmeldung: 29.10.80
Patentblatt 80/22

(84) Benannte Vertragsstaaten: **AT CH IT LI NL SE**

(71) Anmelder: **Fritz Kuke KG, Am Juliusturm 71-73,
D-1000 Berlin 20 (DE)**

(72) Erfinder: **Krumme geb. Turczynsky, Petra, Leubnitzer
Weg 23, D-1000 Berlin 20 (DE)**
Erfinder: **Überlée, Sylvia, Hakenfelder Strasse 8c,
D-1000 Berlin 20 (DE)**

(74) Vertreter: **Diehl, Paul, Lietzenburger Strasse 53,
D-1000 Berlin 15 (DE)**

(54) **Signaltechnische Anschalte-Relaisdose.**

(57) Die Erfindung betrifft eine signaltechnische Anschalte-Relaisdose, bestehend aus einer Signalrelais-Schaltung auf einer Leiterplatte mit Klemmanschlüssen, geeignet für die Ergänzung von Kunststoff- bzw. Metallteilen, die der Installation der Anschalte-Relaisdose im Rahmen der gebäudetechnischen Anwendung dienen, deren Anschluß an einen Starkstromkreis dadurch vereinfacht wird, daß die Leiterplatte (1), die in an sich bekannter Weise innerhalb einer nahezu achteckigen oder wahlweise runden Außenkontur einsetzbar ist, zusätzlich bodenseitig durch eine Kunststoff-Bodenplatte (2a, 2b) und deckelseitig durch eine Berührungsschutz verleihende, einrastende Montagekappe (3), die nur die Anschlußklemmen (4) des Federsatzes des Anschalte-Relais (5) offen läßt und Aussparungen (3a) für das herausragende Anschalte-Relais (5) und ein mittig angeordnetes Kunststoff-Kernstück (6) aufweist, abgedeckt ist. Die aus Kunststoff bestehende Abdeckung (7a, 7b) wird je nach Installationsbedingungen (Unterputz- oder Auf-Putz-Installation) entweder deckelförmig oder kappenförmig ausgebildet und schützt den Relaisstromkreis zuverlässig vor unbeabsichtigten Eingriffen durch den Monteur.

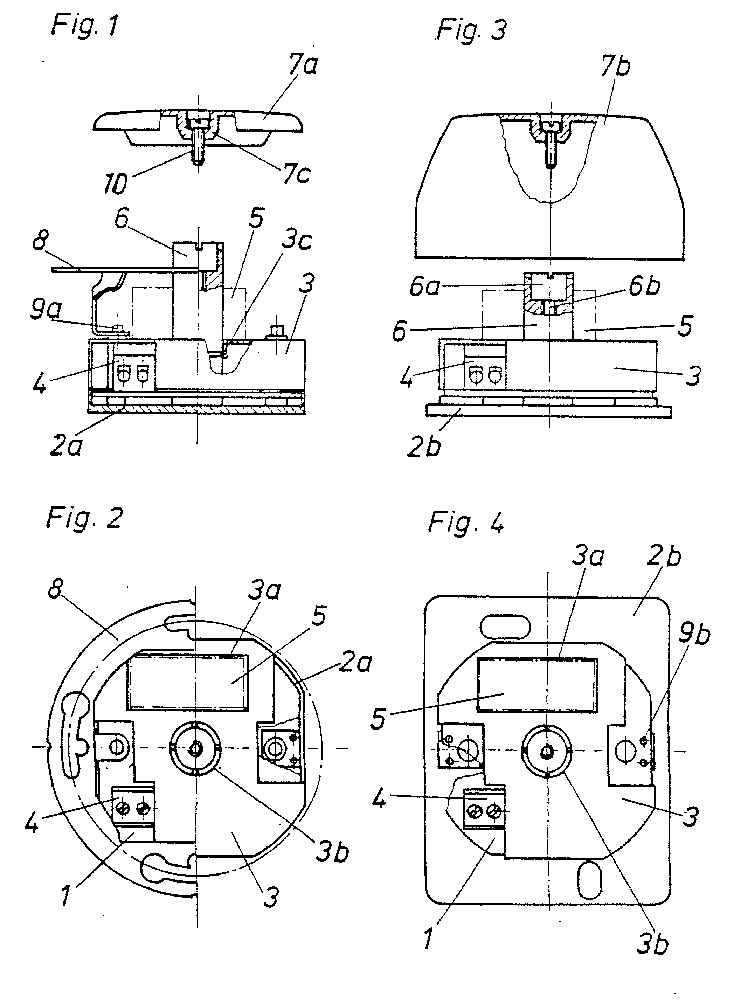

Zur Veröffentlichung zusammen mit der Zusammenfassung wird die Fig. 1 vorgeschlagen.

- 1 -

Signaltechnische Anschalte-Relaisdose

Die Erfindung betrifft eine signaltechnische Anschalte-
Relaisdose, wie sie beispielsweise in Fernmeldeanlagen
verwendet wird, um an einen bereits vorliegenden Fernmeldekreis einen Signalkreis anschließen zu können.
Diese Notwendigkeit ergibt sich beispielsweise dann,
wenn ein Telefonanschluß, dessen Signalgeber in einem
Raum installiert ist, durch einen weiteren, außerhalb
dieses Raumes befindlichen Signalgeber erweitert werden soll.

Derartige Anschalte-Relaisdosen sind bisher in der Weise
ausgebildet, daß die Verschlußkappe der Relaisdose
über diese Relaisdose gestülpt und auf der Außenseite
mit derselben in beispielsweise zwei Rasten verriegelt
wird. In anderen Ausführungsformen wird die Verschlußkappe mit der Trägerplatte der Relaisdose verschraubt.
In jedem Falle ist diese Relaisdose sowohl im Hinblick
auf die Konstruktion als auch im Hinblick auf den
Raumbedarf sehr aufwendig.

Bekannt sind ferner bereits signaltechnische Anschalte-
Relaisdosen, die nicht nur einfacher aufgebaut und
leicht montierbar sind, sondern deren Platzbedarf vor
allem so gering gehalten werden kann, daß sie beispielsweise in vorhandene Wandleerdosen eingesetzt
werden können. Eine derartige Ausführungsform besitzt
als Grundelement eine Leiterplatte, die die benötigten
Schaltungselemente aufnimmt und ein mittig angeordnetes
Kunststoff-Kernstück aufweist, dessen oberes Ende
eine Aufnahmebohrung enthält, in die eine Kunststoff-

0018313

- 2 -

abdeckung mittels eines besonders gestalteten Zapfens haftend eingreifen kann (Gbm 78 33 518).

Der Erfindung liegt die Aufgabe zugrunde, eine derartige signaltechnische Anschalte-Relaisdose dahingehend zu verbessern, daß sie eine einfach und leicht zu montierende, einen allseitigen Berührungsschutz gewährleistende Abdeckung erhält, die nur die Anschlußklemmen für den Signalkreisanschluß freiläßt.

Erfindungsgemäß wird diese Aufgabe dadurch gelöst, daß die Leiterplatte, die in an sich bekannter Weise innerhalb einer nahezu achteckigen oder wahlweise runden Außenkontur einsetzbar ist, zusätzlich bodenseitig durch eine Kunststoff-Bodenplatte und deckelseitig durch eine Berührungsschutz verleihende, einrastende Montagekappe, die nur die Anschlußklemmen des Federsatzes des Anschalte-Relais offen läßt und Aussparungen für das herausragende Anschalte-Relais und ein mittig angeordnetes Kunststoff-Kernstück aufweist, abgedeckt ist.

Dadurch ist zuverlässig dafür gesorgt, daß keine unbeabsichtigten Eingriffe in den Relaisstromkreis beispielsweise während des Anschließens der Anschalte-Relaisdose an einen Starkstromkreis erfolgen können.

Weitere Merkmale der erfindungsgemäßen Anschalte-Relaisdose sind in den Unteransprüchen angegeben.

- 3 -

Die Erfindung wird im folgenden unter Bezugnahme auf die in der Zeichnung dargestellten Ausführungsbeispiele näher erläutert. Es zeigen:

Fig. 1 die teilweise im Schnitt dargestellte Seitenansicht einer Anschalte-Relaisdose für die Unterputz-Installation,

Fig. 2 die Draufsicht dieser Anschalte-Relaisdose, wobei der Tragring im rechten Teil der Darstellung fortgelassen wurde,

Fig. 3 die ebenfalls teilweise im Schnitt dargestellte Seitenansicht einer erfindungsgemäßen Anschalte-Relaisdose für die Auf-Putz-Installation und

Fig. 4 die Draufsicht der Anschalte-Relaisdose gem. Fig. 3, wobei hier die als Kappe ausgebildete Kunststoffabdeckung fortgelassen worden ist.

Gem. den Fig. 1 und 2 ist unterhalb der Leiterplatte die Kunststoff-Bodenplatte 2a, die in diesem Falle eine rechteckige Kontur hat, befestigt, während die Leiterplatte 1 von oben her durch die Montagekappe 3 abgedeckt ist. In dieser Montagekappe 3 sind folgende Aussparungen vorgesehen: 1. die Aussparung 3a für das Anschalte-Relais 5 und 2. die Aussparung 3b für das Kunststoff-Kernstück 6. Ferner ist die Montagekappe 3 im Bereich der Aussparung 3b mit einer Rastnase 3c ausgestattet, mittels derer sie in einen Schlitz des Kunststoff-Kernstückes 6 einrastet und so

- 4 -

in ihrer die gesamte Leiterplatte 1 abdeckenden Position sicher gehalten wird.

Lediglich die Anschlußklemmen 4 des Federsatzes des erfindungsgemäßen Anschalte-Relais werden von der Montagekappe 3 freigelassen.

Das Kunststoff-Kernstück enthält, wie insbesondere auch die Fig.3 erkennen läßt, in seinem oberen Ende die Aufnahmebohrung 6a für den Zapfen 7c der deckelförmigen Kunststoffabdeckung 7a und weiterhin die an die Gewindebohrung 6a anschließende Gewindebohrung 6b, in die die Schraube 10 eingreift, nachdem die deckelförmige Kunststoffabdeckung 7a auf das Kunststoff-Kernstück 6 gesetzt worden ist.

Der Tragring 8, wie er für die Unterputzinstallation benötigt wird, ragt seitlich über den Umfang der deckelförmigen Kunststoffabdeckung 7a hinaus und ist durch die Kunststoffnieten 9b (s.Fig.4) an der Montagekappe 3 befestigt. Die Leiterplatte 1 ist durch die Kunststoffnietung 9b mit der Kunststoffbodenplatte 2a verbunden.

Das Ausführungsbeispiel gem. den Fig.3 und 4 ist grundsätzlich in gleicher Weise ausgebildet wie das eben geschilderte. Abweichend sind lediglich die Form der Kunststoff-Bodenplatte 2b, die hier einen etwa rechteckigen Umfang hat, und die Kunststoff-Abdeckung 7b, die hier kappenförmig ist, gestaltet, wie dies die Auf-Putz-Installation erfordert.

- 5 -

Die Schraube 10 wird vorteilhaft unverlierbar in die Kunststoffabdeckung 7a bzw. 7b eingesetzt.

# -6-

Liste der Zeichnungspositionen:

| | |
|---|---|
| 1 | Leiterplatte |
| 2a | Kunststoff-Bodenplatte / achteckig |
| 2b | "                  "           / rechteckig |
| 3 | Montagekappe |
| 3a | Aussparung Montagekappe für Anschalte-Relais |
| 3b | Aussparung Montagekappe für Kunststoff-Kernstück |
| 3c | Rastnase an Montagekappe |
| 4 | Anschlußklemmen |
| 5 | Anschalte-Relais |
| 6 | Kunststoff-Kernstück |
| 6a | Aufnahmebohrung am Kunststoff-Kernstück |
| 6b | Gewindebohrung   "         "          " |
| 7a | Kunststoffabdeckung / Deckel |
| 7b | "                  / Kappe |
| 7c | Zapfen der Kunststoffabdeckung |
| 8 | Tragring |
| 9a | Kunststoffnietung für Tragring |
| 9b | "                  "   Leiterplatte |
| 10 | Schraube |

- 1 -

A n s p r ü c h e :

1. Signaltechnische Anschalte-Relaisdose, bestehend aus einer Signalrelais-Schaltung auf einer Leiterplatte mit Klemmenanschlüssen, geeignet für die Ergänzung von Kunststoff- bzw. Metallteilen, die der Installation der Anschalte-Relaisdose im Rahmen der gebäudetechnischen Anwendung dienen, dadurch g e k e n n z e i c h n e t , daß die Leiterplatte (1), die in an sich bekannter Weise innerhalb einer nahezu achteckigen oder wahlweise runden Außenkontur einsetzbar ist, zusätzlich bodenseitig durch eine Kunststoff-Bodenplatte (2a, 2b) und deckelseitig durch eine Berührungsschutz verleihende, einrastende Montagekappe (3), die nur die Anschlußklemmen (4) des Federsatzes des Anschalte-Relais (5) offen läßt und Aussparungen (3a) für das herausragende Anschalte-Relais (5) und ein mittig angeordnetes Kunststoff-Kernstück (6) aufweist, abgedeckt ist.

2. Anschalte-Relaisdose nach Anspruch 1, dadurch g e k e n n z e i c h n e t , daß das in an sich bekannter Weise mittig angeordnete Kunststoff-Kernstück (6) am oberen Ende unterhalb einer Aufnahmebohrung (6a) für einen Zapfen (7c) einer Kunststoffabdeckung (7a, 7b) in Deckel- oder Kappenform eine Gewindebohrung (6b) aufweist.

- 2 -

3. Anschalte-Relaisdose nach Anspruch 1 und 2, dadurch g e k e n n z e i c h n e t , daß die in der der Relaisdose zugeordneten Kunststoffabdeckung (7a, 7b) in Deckel- oder Kappenform mittig angeordnete Schraube (10) unverlierbar eingesetzt ist.

0018313

**Fig. 1**

7a
7c
10

8
6
5
3c
3
9a
4
2a

**Fig. 3**

7b

6a
6b
6
5
4
3
2b

**Fig. 2**

8
3a
5
2a
3b
4
1
3

**Fig. 4**

3a
2b
9b
5
4
1
3
3b

| EINSCHLÄGIGE DOKUMENTE | | | KLASSIFIKATION DER ANMELDUNG |
|---|---|---|---|
| Kategorie | Kennzeichnung des Dokuments mit Angabe, soweit erforderlich, der maßgeblichen Teile | betrifft Anspruch | H 02 G 3/16<br>3/14<br>H 01 H 50/02 |
| | <u>CA - A - 1 020 264</u> (PLANTE)<br>  * Seite 1, Zeilen 6-17; Seite 8, Zeilen 1-10 *<br><br>-- | 1 | |
| | <u>DE - A - 2 821 992</u> (AMP)<br>  * Seite 7, Absatz 5 bis Seite 8, Absatz 1; Figur 4 *<br><br>-- | 1 | |
| | <u>DE - A - 2 618 492</u> (SIEMENS)<br>  * Seite 5, Absatz 7 *<br><br>-- | 1 | RECHERCHIERTE SACHGEBIETE (Int.Cl.)<br>H 02 G 3/16<br>3/08<br>H 01 H 50/02<br>H 02 G 3/14<br>H 01 H 50/04 |
| D | <u>DE - U - 7 833 518</u> (KUKE)<br>  * Anspruch 1; Figur 1 *<br><br>-- | 1,2 | |
| | <u>FR - A - 1 320 529</u> (KOLBE)<br>  * Seite 1, rechte Spalte, Absatz 3; Figur 1 *<br><br>-- | 2,3 | |
| | <u>FR - A - 1 099 174</u> (MARS-ACTEL)<br>  * Seite 1, rechte Spalte, Absatz 5; Figur 1 *<br><br>---- | 2,3 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | | |
|---|---|---|
| Der vorliegende Recherchenbericht wurde für alle Patentansprüche erstellt. | | |
| Recherchenort: Den Haag | Abschlußdatum der Recherche: 30-07-1980 | Prüfer: TIELEMANS |

EPA form 1503.1  06.78